# EUROPEAN PATENT SPECIFICATION

(11) **EP 0 617 723 B1**
(45) Date of publication and mention of the grant of the patent: **11.04.2001**
(21) Application number: 93922873.0
(22) Date of filing: 15.10.1993
(51) Int. Cl.: C09D 11/10, B41M 3/16

(54) **PRINTING COMPOUND AND METHOD**
DRUCKZUSAMMENSETZUNG UND VERFAHREN
COMPOSE POUR IMPRESSION ET PROCEDE DE MISE EN UVRE

(30) Priority: 16.10.1992 US 962257; 16.04.1993 US 47133
(43) Date of publication of application: 05.10.1994
(73) Proprietor: LUMINART CORP., Mewbury Park, California 91320 (US)
(72) Inventor: Sokyrka, Harold W., Saskatoon, Saskatchewan S7H 5E9 (CA)
(74) Representative: Austin, Hedley William
(86) International application number: CA9300438
(87) International publication number: WO9409078

(56) References cited:
- EP-A- 0 204 575
- EP-A- 0 235 914
- EP-A- 0 432 093
- WO-A-87/07221
- DE-A- 2 537 783
- DATABASE WPI Week 9327, Derwent Publications Ltd., London, GB; AN 214662 SOKYRKA 'MATERIAL FOR PRODUCING BRAILLE OR TACTILE IMAGES FOR PARTIAL SIGHTED PEOPLE' & CA,A,2 053 675 (SOKYRKA) 18 April 1993

## Description

### TECHNICAL FIELD:

The present invention relates to printing compounds and methods of making three-dimensional signs and lettering, including Braille and other tactile reading material.

### BACKGROUND ART:

Visually impaired individuals, children and learning disabled individuals are taught to read and do read using tactile materials that contain a raised image of the object being taught. The visually impaired who are learning or using the Braille alphabet to read, also benefit from tactile materials that supplement and explain, by being placed alongside the Braille representation of the image. Consequently, tactile reading materials, whether used alone or in conjunction with Braille materials, are critical to the learning process of visually impaired and learning disabled individuals.

Three-dimensional or raised images have also been produced for normally sighted people, such as topographical maps, anatomical displays and the like, as these items are generally considered to be more visually pleasing and informative than two-dimensional displays.

In the past, these three-dimensional or tactile display materials, such as maps, graphs, geometric figures, letters, numbers and images - whether alone or also containing Braille lettering - have been produced using a thermoforming process. In this method, a metal or -lead plate is tediously produced by hand. Following the completion of this plate, a thin plastic sheet is placed on top of the plate, and with the assistance of a thermoforming press, or vacuum forming, the sheets are formed to reproduce the original plate.

This entire process is extremely time-consuming and tedious and lacks accuracy and consistency. Two unfortunate results flow from these limitations. First, the commercial availability of tactile materials used in instructional use for the visually impaired and learning disabled is extremely limited. Second, without tactile materials, instructional use is often limited to Braille.

This new invention directly addresses the limitations that currently exist in producing three-dimensional signs and lettering, including Braille and tactile images for the visually impaired and learning disabled individuals. Consistent and comprehensible reproductions can be produced in a very short time without the tedious limitation of current tactile reproduction methods. Accordingly, mass production of three-dimensional or tactile reading material, with or without Braille lettering is possible with this invention. The present invention makes use of UV curable compositions. Previous uses of UV curable compositions are disclosed in EP-A-0 235 914, EP-A-0 432 093 and WO-A-87 07 221.

### DISCLOSURE OF THE INVENTION:

The present invention provides a printing compound that can be formed into any desired image and cured quickly using ultraviolet radiation. The compound may be dispensed using a computer controlled dispensing apparatus for highly accurate reproductions.

According to one aspect of the invention, there is provided a printing compound which can be arranged in a predetermined pattern to form a three-dimensional display sign and lettering, said printing compound comprising: an ultraviolet radiation curable resin; and a filler mixed with the resin to form a paste; the paste having a consistency such that when applied to a substrate, it forms a bead thereon.

According to another aspect of the invention, there is provided a method of making three-dimensional signs and lettering comprising the steps of providing a substrate, applying a printing compound to the substrate, the compound being a paste formed of ultraviolet radiation curable resin and a filler, the printing compound being arranged in a predetermined pattern. The compound is then subjected to ultraviolet radiation.

### BRIEF DESCRIPTION OF THE DRAWINGS

Preferred embodiments of the invention will now be described by way of example, with reference to the accompanying drawings, in which:
Figure 1 is a plan view of a three-dimensional sign showing various sample images printed in accordance with the present invention;
Figure 2 is an enlarged sectional view taken along lines 2-2 of Figure 1; and
Figure 3 is an enlarged sectional view taken along lines 3-3 of Figure 1.

### MODES FOR CARRYING OUT THE INVENTION:

Referring to the drawings, a sample display sign or tactile image board is generally indicated by reference numeral 10. Display sign 10 has a plurality of images or pictures formed thereon including some alphabetical lettering, but this is for illustration purposes only. Any images, as well as numerals or letters of any alphabet, including Braille, could be used in sign 10.

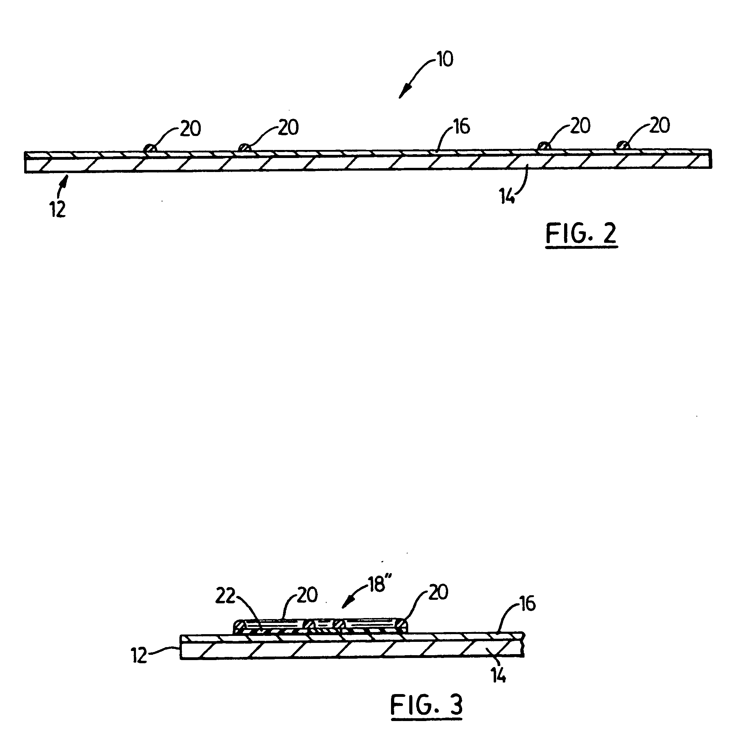

Referring in particular to Figures 2 and 3, display sign 10 includes a planar substrate 12 having printing compound 20 applied thereto. Substrate 12 in the preferred embodiment, is formed of a paper layer 14 laminated to a polyvinylchloride layer 16. However, substrate 12 could be formed of any material, such as paper, cardboard, cloth, sheets of plastic, metal or wood. The only requirement is that the printing compound of the present invention be able to stick to substrate 12. If the printing compound will not stick to the basic material used for substrate 12, then the substrate can be treated such as by applying paint or primer to the surface thereof or laminating another material onto the substrate to which the printing compound will adhere. A further alternative is to engrave or form grooves in the substrate and put the printing compound in the grooves. Further, substrate 12 does not need to be flat. It can be a rounded or curved surface or any other shape for that matter. For the purposes of this invention, the term "substrate" is intended to include any surface to which the printing compound of the present invention is applied. The only requirement is that the printing compound be visible and accessible to be cured by the application of ultraviolet radiation.

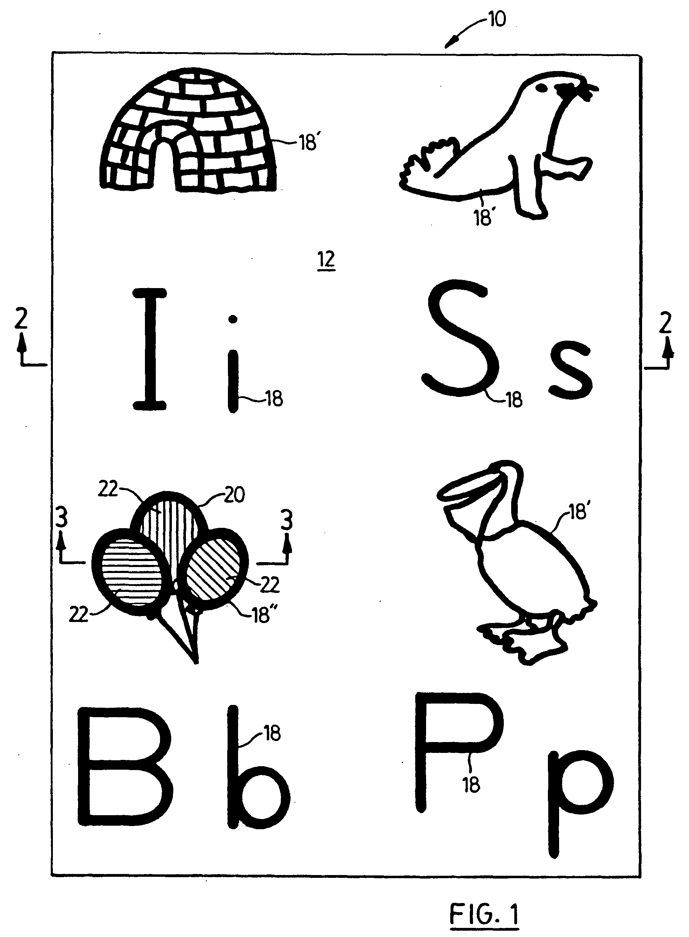

Referring again to Figures 1 and 2, images 18 in the form of graphic designs, letters, numerals, etc. are formed on substrate 12 preferably by laying down a bead of printing compound 20 either to form the letters or images in solid form or in outline as illustrated by the graphic images in Figure 1. The graphic images are represented by primed reference numerals in the drawings. In the case of the balloon image as represented by reference numeral 18" in Figures 1 and 3, prior to applying printing compound 20 to substrate 12 a colored pattern 22 is printed on substrate 12 to represent the body of the balloons, and printing compound 20 is applied to substrate 12 by forming a bead of the compound on the substrate around the periphery of pattern 22. The colors of pattern 22 are chosen so that the balloons appear to be different colors. The bead of printing compound 20 can be the same color as the body of the balloons or it can be a contrasting color or even fluorescent, as desired. Any combination of printed or painted images, with printing compound 20 used to highlight or accent the images, may be made as desired.

The preferred method of applying printing compound 20 to substrate 12 is to use robotics or a computer controlled liquid dispensing machine. One such machine that can be adapted for use in the present invention is produced by Luminescent Artworks Canada Inc. of 5865 Kennedy Road, Mississauga, Ontario, Canada, and is sold under the trade mark LUMINART. To use this machine in the present invention, the printing compound 20 is placed into cartridges, each cartridge having a hole at one end to accommodate a dispensing needle. Each cartridge normally has a different color of printing compound, although the cartridges could have the same color of compound. Further the dispensing needles could have different sizes or shapes to give a variety of shapes and configurations to the printing compound applied to the substrate.

The cartridges are loaded into the computer controlled liquid dispensing machine and connected to pneumatic pressure lines to force the printing compound out of the dispensing needles. The printing compound can be dispensed as dots or lines, the shape and thickness of which are determined by the dispensing needles and the pressure applied to the cartridges.

The Luminescent Artworks liquid dispensing machine mentioned above contains a flat surface or table top 1.2 by 1.2 or 1.2 by 2.4 metres (4 by 4 or 4 by 8 feet). If it is desired to copy or reproduce an original printed or painted work, the printed matter that is to be copied is placed on the flat table top and a camera built into the machine projects the image of the printed matter onto a monitor or television screen. The machine has x, y and z axis co-ordinates or crosshairs. An operator viewing the original printed matter through the co-ordinates on the television screen enters the data co-ordinates of the printed matter and instructs the computer in the machine to store them in its memory. The dispensing robot is then capable of accessing this information to apply air pressure to the cartridges containing the printing compound to dispense the compound as desired.

By controlling air flow and speed, the robot begins to dispense the printing compound by following the co-ordinates that have been stored in the computer memory. For tactile reproduction the robot would dispense the printing compound in a line formation; whereas if the original printed matter, is in the form of Braille lettering, the robot dispenses the compound in a series of dots.

The printing compound 20 is formed of one or both of two types of ultraviolet radiation curable resin mixed with a filler to form a paste of the consistency of toothpaste. The first type of ultraviolet radiation curable resin is an acrylated urethane oligomer including an ultraviolet photo-initiator. The second type is a non-toxic epoxidized oil. In Braille applications, the printing compound should be non-toxic. For other applications, such as display signs, highway signs and the like this usually does not matter. The preferred photo-initiator or curing agent is that sold under the trade-mark Darocur 1173 by Ciba-Geigy. The preferred filler is amorphous fumed silica and the amount of filler used may vary between 1 and 20 percent by weight of the primary resin. For Braille and highway sign applications, the amount of filler is usually between 1 to 2 percent. For tactile and graphic arts and signage the amount of filler normally is between 7 and 9 percent. For highway sign applications, glass beads and sparkle or nacreous pigments can be added to the compound or sprinkled on top of or embedded in the compound before it is cured with the ultraviolet radiation.

Other minor components that can be added to the printing compound in percentage by weight are other monomers (4-6%) to act as reactive diluents, surface cure agents (4-6%), wax (0.25%) to reduce stringiness or tackiness, adhesion promoters (1-3%), colored powdered pigments (1-6%), fluorescent pigments (1-5%), and dyes and optical brighteners (1-5%). The percentage by volume of some of these components can vary plus or minus 20% depending on the color and viscosity desired and the curing temperature of the compound.

Once the printing compound is applied to the substrate, display sign 10 is then placed into an ultraviolet curing chamber, or the printing compound is otherwise exposed to ultraviolet radiation or light in the 350 to 400 nanometer range. The preferred wavelength is 365 nanometers. If the substrate is transparent, the ultraviolet light can be applied from behind. The ultraviolet light may be produced by fluorescent black light, mercury vapor bulbs or even bright sunlight. The preferred source of ultraviolet light is fluorescent black light. Sign 10 is left in the curing chamber for between 1 and 5 minutes depending on the intensity of the light and the thickness of the printing compound. The printing compound cures to a solid form bonded to the substrate although the cured compound is flexible and somewhat resilient. Accordingly, the compound can be applied to a flexible substrate and after curing, this can be wrapped or formed around a curved surface if desired. For outdoor applications, the finished products can be coated with a clear acrylic spray to protect them from the weather.

The printing compounds and method of producing signs and lettering and Braille reading materials of the present invention, as well as many of their attendant advantages, will be understood from the foregoing description and it will be apparent that various changes may be made to the embodiments described without departing from the spirit and scope of the invention or sacrificing all of its material advantages, the embodiments hereinbefore described being merely preferred embodiments thereof.

## Claims

1. A printing compound which can be arranged in a predetermined pattern to form a three-dimensional display sign and lettering, said printing compound comprising: an ultraviolet radiation curable resin; and a filler mixed with the resin to form a paste; the paste having a consistency such that when applied to a substrate, it forms a bead thereon.

2. A printing compound as claimed in claim 1 wherein the resin is an acrylated urethane oligomer including a photo-initiator.

3. A printing compound as claimed in claim 2 wherein the compound includes one or more additional minor components selected from the group consisting of: monomers, surface cure agents, wax, adhesion promoters, powdered coloring pigments, fluorescent pigments, nacreous pigments, sparkle pigments, dyes, optical brighteners and glass beads.

4. A printing compound as claimed in claim 1 wherein the filler is amorphous fumed silica.

5. A printing compound as claimed in claim 1 wherein the resin is non-toxic epoxidized oil.

6. A printing compound as claimed in claim 5 wherein the filler is amorphous fumed silica and further comprising a non-toxic photo-initiator and a non-toxic pigment.

7. A printing compound as claimed in claim 1 and further comprising glass beads mixed with resin and filler.

8. A method of making three-dimensional signs and lettering comprising: providing a substrate (12), applying a printing compound (20) to the substrate, said compound being a paste formed of ultraviolet radiation curable resin and a filler, said printing compound being arranged in a predetermined pattern (18,18',18"); and subjecting the compound to ultraviolet radiation.

9. A method as claimed in claim 8 and further comprising the step prior to applying the compound to the substrate of mixing a dye or pigment into the compound.

10. A method as claimed in claim 8 and further comprising the step prior to applying the compound to the substrate of mixing glass beads into the compound.

11. A method as claimed in claim 8 and further comprising the step prior to applying the compound to the substrate of laminating the substrate with vinyl (16) so that the resin is applied to the vinyl.

12. A method as claimed in 8 and further comprising the step prior to applying the compound to the substrate of printing a pattern (22) on the substrate, and wherein the compound is applied by forming a bead on the substrate around the periphery of the pattern.

13. A method as claimed in claim 8 wherein the resin includes an acrylated urethane oligomer and photo-initiator.

14. A method as claimed in claim 8 wherein the resin includes a non-toxic epoxidized oil.

15. A method as claimed in claim 8 wherein the compound is applied to the substrate using a computer controlled dispensing machine.

## Patentansprüche

1. Druckzusammensetzung, die so in einem vorbestimmten Muster angeordnet werden kann, daß ein dreidimensionales Anzeigeschild und Buchstaben gebildet werden, wobei die Druckzusammensetzung folgendes umfaßt: ein mit UV-Strahlung aushärtbares Harz; sowie einen zur Bildung einer Paste mit dem Harz gemischten Füllstoff; wobei die Paste eine derartige Konsistenz aufweist, daß sie, wenn sie auf ein Substrat aufgebracht wird, einen Wulst hierauf bildet.

2. Druckzusammensetzung wie in Anspruch 1 beansprucht, wobei das Harz ein akryliertes Urethanoligomer mit einem Photoinitiator ist.

3. Druckzusammensetzung wie in Anspruch 2 beansprucht, wobei die Zusammensetzung eine oder mehrere geringfügige zusätzliche Bestandteile enthält, gewählt aus der Gruppe bestehend aus: Monomeren, Oberflächen-Aushärtungsmitteln, Wachs, Adhäsionspromotoren, pulverisierten Farbpigmenten, fluoreszierenden Pigmenten, glänzenden Pigmenten, glitzernden Pigmenten, Farbstoffen, optischen Aufhellern und Glasperlen.

4. Druckzusammensetzung wie in Anspruch 1 beansprucht, wobei der Füllstoff amorphes vaporisiertes Silika ist.

5. Druckzusammensetzung wie in Anspruch 1 beansprucht, wobei das Harz nicht-toxisches epoxidiertes Öl ist.

6. Druckzusammensetzung wie in Anspruch 5 beansprucht, wobei der Füllstoff amorphes vaporisiertes Silika ist, weiterhin enthaltend einen nicht-toxischen Photoinitiator und ein nicht-toxisches Pigment.

7. Druckzusammensetzung wie in Anspruch 1 beansprucht, weiterhin enthaltend Glasperlen gemischt mit Harz und Füllstoff.

8. Verfahren zum Herstellen dreidimensionaler Schilder und Buchstaben, umfassend: Vorsehen eines Substrats (12), Aufbringen einer Druckzusammensetzung (20) auf das Substrat, wobei die Zusammensetzung eine Paste ist, gebildet aus mit UV-Strahlung aushärtbarem Harz und einem Füllstoff, wobei die Druckzusammensetzung in einem vorbestimmten Muster (18, 18', 18") angeordnet wird; sowie Aussetzen der Zusammensetzung einer ultravioletten Strahlung.

9. Verfahren wie in Anspruch 8 beansprucht, weiterhin umfassend den Schritt, vor Aufbringen der Zusammensetzung auf das Substrat, des Mischens eines Farbstoffs oder Pigments in die Zusammensetzung.

10. Verfahren wie in Anspruch 8 beansprucht, weiterhin umfassend den Schritt, vor Aufbringen der Zusammensetzung auf das Substrat, des Mischens von Glasperlen in die Zusammensetzung.

11. Verfahren wie in Anspruch 8 beansprucht, weiterhin umfassend den Schritt, vor Aufbringen der Zusammensetzung auf das Substrat, des Laminierens des Substrats mit Vinyl (16), so daß das Harz auf das Vinyl aufgebracht ist.

12. Verfahren wie in Anspruch 8 beansprucht, weiterhin umfassend den Schritt, vor Aufbringen der Zusammensetzung auf das Substrat, des Druckens eines Musters (22) auf das Substrat, und wobei die Zusammensetzung aufgebracht wird, indem auf dem Substrat um den Umfang des Musters herum ein Wulst gebildet wird.

13. Verfahren wie in Anspruch 8 beansprucht, wobei das Harz ein akryliertes Urethanoligomer und einen Photoinitiator beinhaltet.

14. Verfahren wie in Anspruch 8 beansprucht, wobei das Harz ein nicht-toxisches epoxidiertes Öl beinhaltet.

15. Verfahren wie in Anspruch 8 beansprucht, wobei die Zusammensetzung mittels einer computergesteuerten Ausgabemaschine auf das Substrat aufgebracht wird.

## Revendications

1. Composé d'impression qui peut être agencé selon un motif prédéterminé pour former un support d'affichage et des lettres tridimensionnels, ledit composé d'impression comportant : une résine durcissable par rayonnement ultraviolet, et une charge mélangée à la résine pour former une pâte, la pâte ayant une consistance telle que, lorsqu'elle est appliquée à un substrat, elle forme une perle sur celui-ci.

2. Composé d'impression selon la revendication 1, dans lequel la résine est un oligomère d'uréthanne acrylé incluant un photoamorceur.

3. Composé d'impression selon la revendication 2, dans lequel le composé comporte un ou plusieurs composants mineurs supplémentaires sélectionnés parmi le groupe constitué de : monomères, agents de durcissement de surface, cire, promoteurs d'adhérence, pigments colorants en poudre, pigments fluorescents, pigments nacrés, pigments brillants, teintures, azurants optiques et perles de verre.

4. Composé d'impression selon la revendication 1, dans lequel la charge est une fumée de silice amorphe.

5. Composé d'impression selon la revendication 1, dans lequel 1a résine est une huile époxydique non-toxique.

6. Composé d'impression selon la revendication 5, dans lequel la charge est une fumée de silice amorphe et comportant de plus un photoamorceur non-toxique et un pigment non-toxique.

7. Composé d'impression selon la revendication 1, et comportant de plus des perles de verre mélangées à une résine et une charge.

8. Procédé de réalisation de supports et de lettres tridimensionnels comportant les étapes consistant à : fournir un substrat (12), appliquer un composé d'impression (20) au substrat, ledit composé étant une pâte formée d'une résine durcissable par rayonnement ultraviolet et d'une charge, ledit composé d'impression étant agencé selon un motif prédéterminé (18, 18', 18"), et soumettre le composé à un rayonnement ultraviolet.

9. Procédé selon la revendication 8, et comportant de plus l'étape antérieure à l'application du composé sur le substrat consistant à mélanger une teinture ou un pigment dans le composé.

10. Procédé selon la revendication 8, et comportant de plus l'étape antérieure à l'application du composé sur le substrat consistant à mélanger des perles de verre dans le composé.

11. Procédé selon la revendication 8, et comportant de plus l'étape antérieure à l'application du composé sur le substrat consistant à stratifier le substrat à l'aide de vinyle (16) de sorte que la résine est appliquée sur le vinyle.

12. Procédé selon la revendication 8, et comportant de plus l'étape antérieure à l'application du composé sur le substrat consistant à imprimer un motif (22) sur le substrat, et dans lequel le composé est appliqué en formant une perle sur le substrat autour de la périphérie du motif.

13. Procédé selon la revendication 8, dans lequel la résine comporte un oligomère d'uréthanne acrylé et un photoamorceur.

14. , Procédé selon la revendication 8, dans lequel la résine comporte une huile époxydique non-toxique.

15. Procédé selon la revendication 8, dans lequel le composé est appliqué sur le substrat en utilisant une machine d'alimentation commandée par ordinateur.
